Europäisches Patentamt

European Patent Office

Office européen des brevets

(11) Veröffentlichungsnummer: **0 312 849 B1**

## EUROPÄISCHE PATENTSCHRIFT

(45) Veröffentlichungstag der Patentschrift: **30.12.92**

(51) Int. Cl.⁵: **B60Q 1/52**, G01S 15/93, G01S 7/52

(21) Anmeldenummer: **88116590.6**

(22) Anmeldetag: **06.10.88**

(54) Überwachungseinrichtung für Sensoren, insbesondere Ultraschallsensoren für Kraftfahrzeug-Rückfahr-Überwachung.

(30) Priorität: **19.10.87 DE 3735348**

(43) Veröffentlichungstag der Anmeldung:
**26.04.89 Patentblatt 89/17**

(45) Bekanntmachung des Hinweises auf die Patenterteilung:
**30.12.92 Patentblatt 92/53**

(84) Benannte Vertragsstaaten:
**AT DE FR GB IT SE**

(56) Entgegenhaltungen:
**EP-A- 0 048 958**
**DE-A- 3 207 950**
**US-A- 3 491 334**
**US-A- 3 749 197**

**PATENT ABSTRACTS OF JAPAN, Band 8, Nr. 219 (P-306)[1656], 5. Okfober 1984, Seite 99; & JP-A-59 102 173 (OKI DENKI KOGYO K.K.) 13-06-1984**

(73) Patentinhaber: **SIEMENS AKTIENGESELL-SCHAFT**
**Wittelsbacherplatz 2**
**W-8000 München 2(DE)**

(72) Erfinder: **Forster, Alfred, Dipl.-Ing.(FH)**
**Nariskerstrasse 3**
**W-8460 Schwandorf(DE)**
Erfinder: **Zimmermann, Rudolf, Dipl.-Ing. (FH)**
**Hammerphilippsburg 3**
**W-8458 Sulzbach-Rosenberg(DE)**

## Beschreibung

Die Erfindung bezieht sich auf eine Überwachungseinrichtung für Sensoren, insbesondere Ultraschallsensoren für Kraftfahrzeug-Rückfahr-Überwachung, bei der zu Testzwecken ein in vorbestimmbarem Abstand vom Sensor liegendes Testobjekt dient.

Überwachungseinrichtungen der obengenannten Art sind z.B. aus der DE-OS 32 07 950 bekannt. Hier wird eine Abstandsmeßvorrichtung mit einer Sende- und Empfangseinrichtung für ein Meßsignal beschrieben, das am zu messenden Gegenstand reflektiert wird. Eine das Meßsignal auswertende Laufzeiterkennungsvorrichtung erzeugt bei Erreichen wenigstens einer vorgegebenen Laufzeit und damit eines vorgegebenen Abstands ein akustisches und/ oder optisches Signal. Der Sande- und Empfangseinrichtung ist in einem vorgegebenen Abstand ein Reflektor zugeordnet. Das von diesem Reflektor empfangene Laufzeitsignal steuert eine akustische und/oder optische Funktionskontrolleinrichtung. Die Abstandsmeßvorrichtung kann nach dem Ultraschall- oder Infrarotprinzip arbeiten. Es erfolgt eine ständige aktive Funktionsprüfung und Funktionsanzeige während des Betriebes der Abstandsmeßvorrichtung. Bei dieser Betriebsweise ist es jedoch möglich, daß die Schallübertragung durch das Testobjekt, d.h. den Reflektor behindert wird und weiterhin die genaue Messung der Objektentfernung durch Mehrfachreflektionen vom Reflektor beeinflußt wird.

In der EP-A-0 048 958 ist eine Kraftfahrzeug-Überwachungseinrichtung nach dem Ultraschall-Echoprinzip offenbart, bei der ein Ultraschall-Sensor in einem trichterförmigen Gehäuse untergebracht ist, das zur Bündelung von zu empfangenden Ultraschallwellen dient. Der Trichter wird außerhalb der Betriebszeit zum Schutz gegen Witterungseinflüsse durch einen Deckel verschlossen. Ein Test der einwandfreien Funktion des Sensors ist hier jedoch nicht vorgesehen.

Aus der JP-A-59 102 173 ist bekannt, die Funktionsfähigkeit von Sendern und Empfängern bei der Radar-Abstandsmessung unter Zuhilfenahme von Reflexionen an der Bodenoberfläche zu überwachen.

Der Erfindung liegt somit die Aufgabe zugrunde, eine Überwachungseinrichtung zu schaffen, bei der die Abstandsmessung nicht durch das Testobjekt beeinflußt wird. Dies wird auf einfache Weise dadurch erreicht, daß die Stellung zwischen dem Testobjekt und dem Sensor automatisch derart veränderbar ist, daß das Testobjekt während der Testphase im Erfassungsbereich des Sensors liegt und während der Betriebsphase zur eigentlichen Abstandsmessung außerhalb seines Erfassungsbereiches liegt. Durch eine derartige Unterscheidung zwischen der eigentlichen Betriebsphase und der Testphase ist es möglich, den Einfluß des Testobjekts auszuschalten. Weiterhin ist es vorteilhaft, wenn das Element im Ruhezustand des Sensors im Erfassungsbereich liegt, da dann das Element nach Aktivierung des Sensors signalabhängig selbsttätig aus dem Erfassungsbereich herausgeschwenkt werden kann. Das Element kann beispielsweise ein Stift sein. Um den Sensor jedoch gegen Umweltbelastungen, wie Verschmutzung oder Vereisung am Kraftfahrzeug, zu schützen und hierdurch gleichzeitig eine Überwachungsmöglichkeit zu erhalten ist es vorteilhaft, wenn das Element eine Gehäuseklappe ist. Derartige Vorteile gelten auch bei einer Anordnung, bei der der Sensor gegen die Rückwand des Gehäuses als Element schwenkbar ist. Dies hat jedoch weiterhin den Vorteil, daß beim Aktivieren des Sensors seitlich über den Sensor hinaus keine Teile herausgefahren werden müssen. Um zwangsläufig die richtige Position des Sensors an einem Fahrzeug mitüberprüfen zu können ist eine weitere Ausführungsform von Vorteil, die darin besteht, daß der Sensor bei Einbau in Fahrzeugen zur Fahrbahn als bekanntes Element schwenkbar ist. Liegt der Sensor außerhalb der Betriebsphase in einem Schutzgehäuse, so wird eine Verschmutzung des Sensors durch Umwelteinflüsse weitgehend vermieden.

Anhand der Zeichnung wird ein Ausführungsbeispiel gemäß der Erfindung beschrieben.

Es zeigen:

FIG 1 und 2     Test- bzw. Ruhestellung und Arbeitsstellung des Sensors mit einem Stift als bekanntem Element,

FIG 3 und 4     Test- bzw. Ruhestellung und Arbeitsstellung einer Ausführungsform, bei der die Klappe des Gehäuses ausschwenkbar ist,

FIG 5 und 6     eine Ausführung, bei der der Sensor selbst zur Rückwand des Gehäuses hin verschwenkbar ist und die

FIG 7 und 8     Test- bzw. Ruhestellung und Arbeitsstellung einer Ausführung, bei der der Sensor auf die Straßenoberfläche zu als bekanntes Objekt verschwenkbar ist.

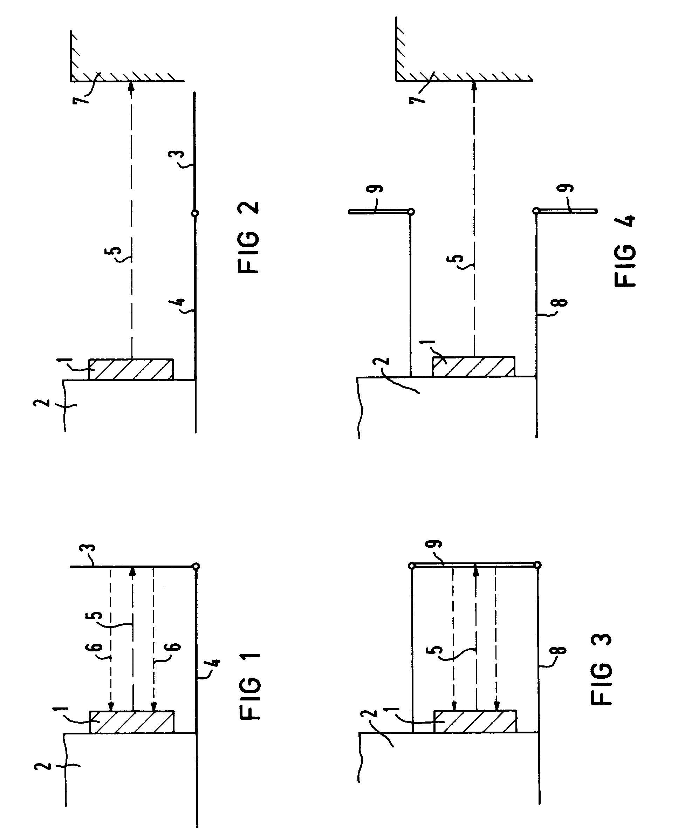

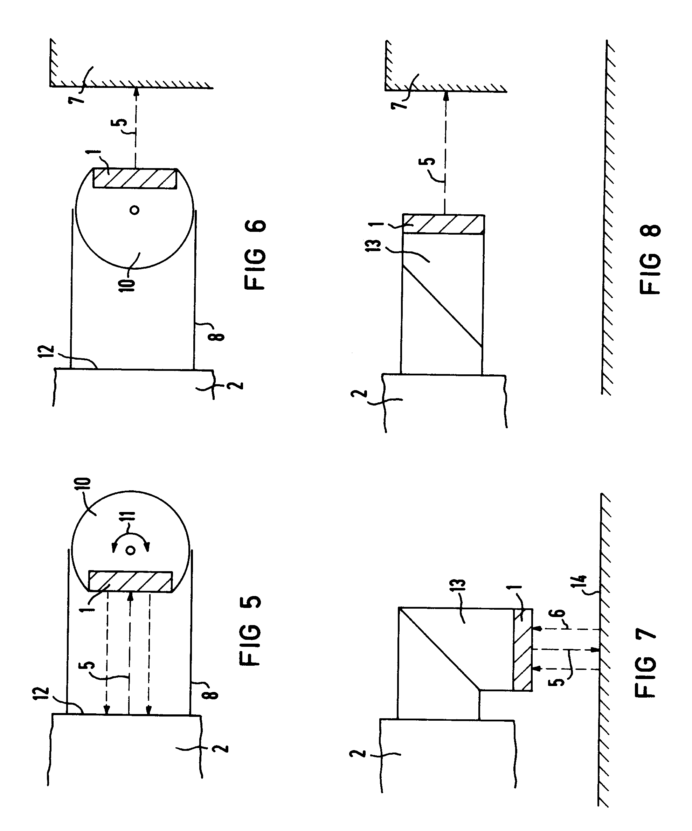

Der Ultraschallsensor 1 ist im Ausführungsbeispiel an der Fahrzeugrückseite 2 befestigt. Ein Stift 3 ist beispielsweise über eine Halterung 4 in einem vorbestimmbaren Abstand zum Ultraschallsensor gehalten, so daß ein Echoimpuls 5 durch den Stift 3 als Reflektionsimpuls 6 auf den Ultraschallsensor 1 zurückreflektiert wird. Die nicht näher dargestellte Auswerteschaltung des Ultraschallsensors erkennt die Funktionstüchtigkeit, so daß der Stift 3 in die aus FIG 2 ersichtliche Lage abgeschwenkt werden kann, so daß der Echoimpuls 5 beispielsweise von einer Beladerampe 7 zur Rückfahrüberwachung des Fahrzeuges reflektiert werden kann. Der Stift kann beispielsweise nach Einschalten der Rückfahrsicherung automatisch aus dem Erfassungsbereich des Sensors herausgeschwenkt werden, sobal die Überwachungseinrichtung die Funktionsfähigkeit des Sensors überprüft hat. Im Ausführungsbeispiel nach FIG 3 ist der Sensor 1 in einem Gehäuse 8 befestigt, das durch eine Klappe 9 - im Ausführungsbeispiel zwei Klappenteile - abgeschlossen ist, so daß der Echoimpuls 5 von der geschlossenen Klappe 9 in der vorgeschriebenen Weise reflektiert wird. Auch hier kann die Klappe automatisch geöffnet werden. Diese Ausführungsform hat den Vorteil, daß der Sensor 1 im Gehäuse geschützt gegen Umwelteinflüsse liegt, d.h. Vereisung im Winter und Verschmutzung sind generell ausgeschlossen, da die Klappe nur im Bedarfsfalle, d.h. bei Aktivierung des Sensors beim Rückwärtsfahren geöffnet wird. Die Klappen können motorisch angetrieben werden oder auch mit Druckluft betätigt werden, die im Lastwagen vorhanden ist. Im Ausführungsbeispiel nach FIG 5 ist der Sensor 1 auf einer Walze 10 befestigt, die den Abschluß für das Gehäuse 8 darstellt und in Pfeilrichtung 11 verschwenkbar ist, so daß der Sensor einmal in Test- bzw. Ruhestellung in Richtung auf die Rückwand 12 des Gehäuses 8 zeigt, und zum anderen - wie aus FIG 6 zu ersehen ist - den Echoimpuls 5 in Richtung auf die Beladerampe 7 aussendet. Eine Halterung 13 gemäß FIG 7 zur Halterung des Ultraschallsensors 1 ist im Winkel von 45° zueinander geschnitten und gegeneinander verschwenkbar, so daß der Sensor 1 von der aus FIG 7 ersichtlichen Lage in die aus FIG 8 entnehmbare überführbar ist. FIG 7 stellt die Teststellung dar, d.h. der Ultraschallimpuls 5 wird von der Straßenoberfläche 14 in Form der Reflektionsimpulse 6 auf den Sensor 1 reflektiert, um hierbei die Funktionsfähigkeit zu überprüfen. Ist sie vorhanden, kann der Sensor in die aus FIG 8 ersichtliche Lage verschwenkt werden, so daß die Rückfahr-Überwachung in Aktion tritt.

**Patentansprüche**

1. Überwachungseinrichtung für Sensoren, insbesondere Ultraschallsensoren für Kraftfahrzeug-Rückfahr-Überwachung, bei der zu Testzwecken ein in vorbestimmbarem Abstand vom Sensor (1) liegendes Testobjekt (3) dient, **dadurch gekennzeichnet,** daß die Stellung zwischen dem Testobjekt (3) und dem Sensor (1) automatisch derart veränderbar ist, daß das Testobjekt (3) während der Testphase im Erfassungsbereich des Sensors (1) liegt und während der Betriebsphase zur Abstandsmessung außerhalb seines Erfassungsbereichs liegt.

2. Überwachungseinrichtung nach Anspruch 1, **dadurch gekennzeichnet,** daß das Testobjekt (3) nach Aktivierung des Sensors (1) signalabhängig selbsttätig aus dem Erfassungsbereich herausgeschwenkt ist.

3. Überwachungseinrichtung nach Anspruch 1 oder 2, **dadurch gekennzeichnet,** daß das Testobjekt (3) eine Klappe (9) eines Gehäuses (8) ist.

4. Überwachungseinrichtung nach Anspruch 3, **dadurch gekennzeichnet,** daß der Sensor (1) gegen die Rückwand des Gehäuses (8) als Testobjekt (3) schwenkbar ist.

5. Überwachungseinrichtung nach Anspruch 1, **dadurch gekennzeichnet,** daß der Sensor (1) bei Einbau in Fahrzeugen zur Fahrbahn als bekanntes Testobjekt (3) schwenkbar ist.

6. Überwachungseinrichtung nach Anspruch 1, **dadurch gekennzeichnet**, daß der Sensor (1) außerhalb der Betriebsphase in einem Schutzgehäuse liegt.

**Claims**

1. Supervisory apparatus for sensors, particularly ultrasonic sensors for supervising reversing motor vehicles, in which apparatus a test object (3) which lies at a predeterminable distance from the sensor (1) is used for test purposes, characterised in that the relative positioning of the test object (3) and the sensor (1) can be varied automatically such that the test object (3) lies in the detection range of the sensor (1) during the test phase and outside its detection range during the operating phase for distance measurement.

2. Supervisory apparatus according to claim 1, characterised in that the test object (3) is automatically swivelled out of the detection range, after activation of the sensor (1), in a signal-dependent manner.

3. Supervisory apparatus according to claim 1 or 2, characterised in that the test object (3) is a flap (9) of a housing (8).

4. Supervisory apparatus according to claim 3, characterised in that the sensor (1) can be swivelled towards the rear wall of the housing (8), the rear wall being the test object (3).

**5.** Supervisory apparatus according to claim 1, characterised in that the sensor (1) when installed in vehicles can be swivelled to the roadway, the roadway being a known test object (3).

**6.** Supervisory apparatus according to claim 1, characterised in that the sensor (1) lies in a protective housing when not in the operating phase.

**Revendications**

**1.** Dispositif de contrôle pour des capteurs, notamment des capteurs à ultrasons pour le contrôle de la marche arrière de véhicules automobiles, dans lequel, pour réaliser un test, on utilise un objet de test (3), qui est situé à une distance pouvant être prédéterminée du capteur (1), caractérisé par le fait que la position peut être modifiée automatiquement entre l'objet de test (3) et le capteur (1), que l'objet de test (3) est situé dans la zone de détection du capteur (1) pendant la phase de test et est situé à l'extérieur de la zone de détection du capteur pendant la phase de fonctionnement pour la mesure de distance.

**2.** Dispositif de contrôle suivant la revendication 1, caractérisé par le fait que l'objet de test (3) est automatiquement écarté par pivotement hors de la zone de détection, en fonction du signal, après activation du capteur (1).

**3.** Dispositif de contrôle suivant la revendication 1 ou 2, caractérisé par le fait que l'objet de test (3) est un volet (9) d'un boîtier (8).

**4.** Dispositif de contrôle suivant la revendication 3, caractérisé par le fait que le capteur (1) peut pivoter contre la paroi arrière du boîtier (8) en tant qu'objet de test (3).

**5.** Dispositif de contrôle suivant la revendication 1, caractérisé par le fait que dans le cas de son montage dans des véhicules, le capteur (1) peut pivoter en direction de la voie de déplacement en tant qu'objet de test connu (3).

**6.** Dispositif de contrôle suivant la revendication 1, caractérisé-par-le fait que le capteur (1) est situé dans un boîtier de protection, en dehors de la phase de fonctionnement.

EP 0 312 849 B1

FIG 1

FIG 2

FIG 3

FIG 4

FIG 5

FIG 6

FIG 7

FIG 8

EP 0 312 849 B1